# EUROPEAN PATENT SPECIFICATION

(11) **EP 1 957 581 B1**
(45) Date of publication and mention of the grant of the patent: **20.10.2010**
(21) Application number: 06838811.5
(22) Date of filing: 01.12.2006
(51) Int. Cl.: C08L 67/02, C08L 67/04

(54) **POLY(TRIMETHYLENE TEREPHTHALATE)/POLY(ALPHA-HYDROXY ACID) MOLDED, SHAPED ARTICLES**
AUS POLY(TRIMETHYLEN-TEREPHTHALAT)/POLY(ALPHA-HYDROXYSÄURE) HERGESTELLTE GEFORMTE ARTIKEL
ARTICLES MOULES, FORMES EN POLY(TRIMETHYLENE TEREPHTALATE)/POLY(ACIDE ALPHA-HYDROXY)

(30) Priority: 07.12.2005 US 296176
(43) Date of publication of application: 20.08.2008
(73) Proprietor: E.I. DU PONT DE NEMOURS AND COMPANY, Wilmington, DE 19898 (US)
(72) Inventor: KURIAN, Joseph, V., Hockessin, Delaware 19707 (US); FENYVESI, Gyorgyi, Wilmington, Delaware 19803 (US); GODWIN, Richard, E., Wilmington, Delaware 19805 (US)
(74) Representative: Hirsch, Marc-Roger
(86) International application number: PCT/US2006/046050
(87) International publication number: WO 2007/067434

(56) References cited:
- DATABASE WPI Week 200374 Derwent Publications Ltd., London, GB; AN 2003-782622 XP002434452 & JP 2003 041435 A (TEIJIN LTD) 13 February 2003 (2003-02-13) cited in the application

## Description

### FIELD OF THE INVENTION

This invention relates to poly(trimethylene terephthalate)/poly(alpha-hydroxy acid) molded,shaped articles, methods for making the same and end uses thereof.

### BACKGROUND OF THE INVENTION

Poly(trimethylene terephthalate) ("PTT") and its use in many applications, including molded, shaped products, has been described in the literature. PTT is a polyester derived from terephthalic acid or an ester thereof and trimethylene glycol (also known as 1,3-propanediol) ("PDO"). The PDO may be prepared by various chemical or biochemical routes, including from various sugar sources such as corn, thus can be prepared from a renewable resource. New PTT articles having improved toughness, elongation and surface properties have been desired. In addition, since terephthalic acid and its esters are presently prepared from petroleum base, it is desired to increase the green (renewable resource base) of PTT compositions without harming the overall properties of products.

Japanese Patent Publication No. 2003-041435 describes mixtures of PTT and 1-10 wt.% of a polyester consisting essentially of polylactic acid. The mixtures are used to prepare hollow, crimped staple fibers. Poly(lactic acid) can also be prepared from a renewable resource, being prepared from lactic acid (2-hydroxypropionic acid) and its intermolecular esters that are in turn prepared from carbohydrates by lactic acid fermentation. Japanese Patent Publication No. 2003-041435 is focused on using polylactic acid to provide a more stable crimp, and does not describe molded, shaped products or improvements thereto.

### SUMMARY OF THE INVENTION

This invention is directed to a molded, shaped article with the exception of extruded fibers comprising a polymer composition comprising 25 to 98 wt%, by weight of the polymer composition, of poly(trimethylene terephthalate) and 75 to 2 wt%, by weight of the polymer composition, of poly(alpha-hydroxy acid).

The invention is also directed to a process for preparing a molded, shaped article with the exception of extruded fibers, comprising the steps of: (a) providing a polymer composition comprising 25 to 98 wt%, by weight of the polymer composition, of poly(trimethylene terephthalate) and 75 to 2 wt%, by weight of the polymer composition, of poly(alpha-hydroxy acid); and (b) forming a shaped article in a mold from the polymer composition.

In a preferred embodiment, the poly(trimethylene terephthalate) comprises a continuous phase of the polymer composition, and the poly(alpha-hydroxy acid) comprises a discontinuous phase of the polymer composition.

In one preferred embodiment, the forming a shaped article comprises melt injection molding the polymer composition. Preferably the melt injection molding is selected from the group consisting of injection compression molding, reaction injection molding, and extrusion compression molding.

In one preferred embodiment, the melt injection molding is reaction Injection molding.

In another preferred embodiment, the forming a shaped article comprises blow molding the polymer composition.

In a further preferred embodiment, the forming a shaped article comprises slush molding the polymer composition.

In an additional preferred embodiment, the forming a shaped article comprises rotomolding the polymer composition.

In one preferred embodiment, the polymer composition comprises 40 to 98 wt%, by weight of the polymer composition, of poly(trimethylene terephthalate) and 60 to 2 wt%, by weight of the polymer composition, of the poly(alpha-hydroxy acid).

In another preferred embodiment, the polymer composition comprises 50 to 98 wt%, by weight of the polymer composition, of poly(trimethylene terephthalate) and 50 to 2 wt%, by weight of the polymer composition, of the poly(alpha-hydroxy acid).

In an additional preferred embodiment, the polymer composition comprising 60 to 98 wt%, by weight of the polymer composition, of poly(trimethylene terephthalate) and 40 to 2 wt%, by weight of the polymer composition, of the poly(alpha-hydroxy acid).

In yet an additional preferred embodiment, the polymer composition comprises 75 to 95 wt%, by weight of the polymer composition, of poly(trimethylene terephthalate) and 25 to 5 wt%, by weight of the polymer composition, of the poly(alpha-hydroxy acid).

In one more preferred embodiment, the polymer composition comprising 60 to 90 wt%, by weight of the polymer composition, of poly(trimethylene terephthalate) and 40 to 10 wt%, by weight of the polymer composition, of the poly(alpha-hydroxy acid).

Preferably, the poly(trimethylene terephthalate) is made with a 1,3-propane diol prepared by a fermentation process using a renewable biological source.

Preferably the poly(alpha-hydroxy acid) is polylactic acid, more preferably a bio-derived polylactic acid.

In one preferred embodiment, the molded, shaped article contains 5 wt% to 70 wt% filler, by weight of the polymer composition. Preferably the filler is glass, such as glass fibers.

In another preferred embodiment, the molded, shaped article of claim is unfilled.

In one preferred embodiment, the molded, shaped article is in the form of a flat-formed sheet with a thickness equal to or greater than 150 mils to 2 inches.

The molded products of the invention had similar or better properties to those prepared with PTT alone. This is unexpected since poly(alpha-hydroxy acid) polymers have significantly lower physical and mechanical properties than PTT. Thus, using poly(alpha-hydroxy acid) polymers, the practioner can increase the green content (renewable resource percentage) in an engineering plastic component without significantly deteriorating the properties of the final product. Moreover, the physical properties of certain PTT molded products can be increased using poly(alpha-hydroxy acid) per the invention.

### DETAILED DESCRIPTION OF THE PREFERRED EMBODIMENTS

All publications, patent applications, patents, and other references mentioned herein are incorporated by reference in their entirety. Unless otherwise defined, all technical and scientific terms used herein have the same meaning as commonly understood by one of ordinary skill in the art to which this invention belongs. In case of conflict, the present specification, including definitions, will control.

Except where expressly noted, trademarks are shown in upper case.

The materials, methods, and examples herein are illustrative only and, except as specifically stated, are not intended to be limiting. Although methods and materials similar or equivalent to those described herein can be used in the practice or testing of the present invention, suitable methods and materials are described herein.

Unless stated otherwise, all percentages, parts, ratios, etc., are by weight.

When an amount, concentration, or other value or parameter is given as either a range, preferred range or a list of upper preferable values and lower preferable values, this is to be understood as specifically disclosing all ranges formed from any pair of any upper range limit or preferred value and any lower range limit or preferred Value, regardless of whether ranges are separately disclosed. Where a range of numerical values is recited herein, unless otherwise stated, the range is intended to include the endpoints thereof, and all integers and fractions within the range. It is not intended that the scope of the invention be limited to the specific values recited when defining a range.

When the term "about" is used in describing a value or an end-point of a range, the disclosure should be understood to include the specific value or end-point referred to.

As used herein, the terms "comprises," "comprising," "includes," "including," "has," "having" or any other variation thereof, are intended to cover a non-exclusive inclusion. For example, a process, method, article, or apparatus that comprises a list of elements is not necessarily limited to only those elements but may include other elements not expressly listed or inherent to such process, method, article, or apparatus. Further, unless expressly stated to the contrary, "or" refers to an inclusive or and not to an exclusive or. For example, a condition A or B is satisfied by any one of the following: A is true (or present) and B is false (or not present), A is false (or not present) and B is true (or present), and both A and B are true (or present).

Use of "a" or "an" are employed to describe elements and components of the invention. This is done merely for convenience and to give a general sense of the invention. This description should be read to include one or at least one and the singular also includes the plural unless it is obvious that it is meant otherwise.

This invention relates to polymer compositions, melt-blended mixtures, and molded, shaped articles with the exception of extruded fibers comprising the polymer compositions. The polymer compositions and melt-blended mixtures, comprise poly(trimethylene terephthalate)s and polymers of alpha-hydroxy acids. The amount of the polymer of alpha-hydroxy acid or acids is at least 2%, more preferably at least 5%, and more preferably at least 10%. The amount of the polymer of an alpha-hydroxy acid is up to 75%, in another embodiment up to 60%, in yet another embodiment up to 50%, in a further embodiment less than 50%, in yet a further embodiment up to 40%, and in an addition embodiment up to 25%. Preferably the poly(trimethylene terephthalate) is used in an amount of up to 98 %, in another embodiment preferably up to 95 %, and in an additional embodiment preferably up to 90%. It is preferably used in amount at least 25%, in another embodiment at least 40%, in yet another embodiment preferably at least 50%, in a further embodiment greater than 50%, in an additional embodiment at least 60%, and in one additional embodiment at least 75%. The foregoing are weight percentages, and are based upon the total weight of the polymer compositions and melt-blended polyester mixtures, respectively. Where fillers and other additives aren't used, the same percentages can apply to the molded, shaped articles. For convenience, polymer compositions of the invention are sometimes referred to as "PTT/PAHA polymers".

In a preferred embodiment; the polymer composition comprises a polymer continuous phase of PTT and a polymer discontinuous phase comprising PAHA polymer(s) dispersed throughout the polymer composition or molded products. This definition specifically includes one or more other polymers being dispersed in the polymer composition/molded product, and other additives and ingredients being present.

Poly(trimethylene terephthalate) or PTT, is meant to encompass homopolymers and copolymers containing at least 70 mole% trimethylene terephthalate repeat units. The preferred poly(trimethylene terephthalate)s contain at least 85 mole%, more preferably at least 90 mole%, even more preferably at least 95 or at least 98 mole%, and most preferably 100 mole%, trimethylene terephthalate repeat units.

Poly(trimethylene terephthalate) is generally produced by the acid-catalyzed polycondensation of 1,3-propane diol and terephthalic acid/diester, with optional minor amounts of other monomers.

When the PTT is a copolymer, it can contain up to 30 mole%, preferably up to 15 mole%, more preferably up 10 mole%, even more preferably up to 5 mole%, and most preferably up to 2 mole%, and of repeating units that contain other units. These repeating .unit preferably contain dicarboxylic acids having 4-12 carbon atoms (for example butanedioic acid, pentanedioic acid, hexanedioic acid, dodecanedioic acid, and 1,4-cyclo-hexanedicarboxylic acid); aromatic dicarboxylic acids other than terephthalic acid and having 8-12 carbon atoms (for example isophthalic acid and 2,6-naphthalenedicarboxylic acid); and linear, cyclic, and branched aliphatic diols having 2-8 carbon atoms other than 1 ,3-propanediol (for example, ethanediol , 1,2-propanediol, 1,4-butanediol, 3-methyl-1,5-pentanediol, 2,2-dimethyl-1,3-propanediol, 2-methyl-1,3-propanediol, and 1,4-cyclohexanediol).

The poly(trimethylene terephthalate) can contain minor amounts of other comonomers, and such comonomers are usually selected so that they do not have a significant adverse affect on properties. Such other comonomers include 5-sodium-sulfoisophthalate, for example, at a level in the range of 0.2 to 5 mole%. Very small amounts of trifunctional comonomers, for example trimellitic acid, can be incorporated for viscosity control.

A particular preferred poly(trimethylene terephthalate) is one in which the 1,3-propane diol used to make the polymer comprises (preferably substantially comprises) a 1,3-propane diol prepared by a fermentation process using a renewable biological source. As an illustrative example of a starting material from a renewable source, biochemical routes to 1,3-propanediol (PDO) have been described that utilize feedstocks produced from biological and renewable resources such as corn feed stock. For example, bacterial strains able to convert glycerol into 1,3-propanediol are found in the species *Klebsiella, Citrobacter, Clostridium,* and *Lactobacillus.* The technique is disclosed in several publications, including US5633362, US5686276 and US5821092. US5821 092 discloses, *inter alia,* a process for the biological production of 1,3-propanediol from glycerol using recombinant organisms. The process incorporates *E. coli* bacteria, transformed with a heterologous pdu diol dehydratase gene, having specificity for 1,2-propanediol. The transformed *E. coli* is grown in the presence of glycerol as a carbon source and 1,3-propanediol is isolated from the growth media. Since both bacteria and yeasts can convert glucose (e.g., corn sugar) or other carbohydrates to glycerol, the processes disclosed in these publications provide a rapid, inexpensive and environmentally responsible source of 1,3-propanediol monomer.

The biologically-derived 1,3-propanediol, such as produced by the processes described and referenced above, contains carbon from the atmospheric carbon dioxide incorporated by plants, which compose the feedstock for the production of the 1,3-propanediol. In this way, the biologically-derived 1,3-propanediol preferred for use in the context of the present invention contains only renewable carbon, and not fossil fuel-based or petroleum-based carbon. The poly(trimethylene terephthalates) based thereon utilizing the biologically-derived 1,3-propanediol, therefore, have less impact on the environment as the 1,3-propanediol used in the compositions does not deplete diminishing fossil fuels and, upon degradation, releases carbon back to the atmosphere for use by plants once again.

Preferably the 1,3-propanediol used as the reactant or as a component of the reactant will have a purity of greater than 99%, and more preferably greater than 99.9%, by weight as determined by gas chromatographic analysis. Particularly preferred are the purified 1,3-propanediols as disclosed in US7038092, US2004-0260125A1, US2004-0225161A1 and US2005-0069997A1.

The purified 1,3-propanediol preferably has the following characteristics:
(1) an ultraviolet absorption at 220 nm of less than 0.200, and at 250 nm of less than 0.075, and at 275 nm of less than 0.075; and/or
(2) a composition having L*a*b* "b*" color value of less than 0.15 (ASTM D6290), and an absorbance at 270 nm of less than 0.075; and/or
(3) a peroxide composition of less than 10 ppm; and/or
(4) a concentration of total organic impurities (organic compounds other than 1,3-propanediol) of less than 400 ppm, more preferably less than 300 ppm, and still more preferably less than 150 ppm, as measured by gas chromatography.

The intrinsic viscosity of the poly(trimethylene terephthalate) of the invention is at least 0.5 dL/g, preferably at least 0.7 dL/g, more preferably at least 0.8 dUg, more preferably at least 0.9 dUg, and most preferably at least 1 dL/g. The intrinsic viscosity of the polyester composition of the invention are preferably up to 2.5 dL/g, more preferably up to 2 dL/g, even more preferably up to 1.5 dL/g, and most preferably up to 1.2 dL/g.

Poly(trimethylene terephthalate) and preferred manufacturing techniques for making poly(trimethylene terephthalate) are described in US5015789, US5276201, US5284979, US5334778, US5364984, US5364987, US5391263, US5434239, US5510454, US5504122, US5532333, US5532404, US5540868, US5633018, US5633362, US5677415, US5686276, US5710315, US5714262, US5730913, US5763104, US5774074, US5786443, US5811496, US5821092, US5830982, US5840957, US5856423, US5962745, US5990265, US6232511, US6235948, US6245844, US6255442, US6277289, US6281325, US6297408, US6312805, US6325945, US6331264, US6335421, US6350895, US6353062, US6437193, US6538076, US6841505 and US6887953, all of which are incorporated herein by reference.

Poly(trimethylene terephthalate)s useful as the polyester of this invention are commercially available from E. I. du Pont de Nemours and Company, Wilmington, Delaware, under the trademark SORONA, and from Shell Chemicals, Houston, Texas, under the trademark CORTERRA.

The polymerized alpha-hydroxy acids ("PAHA") used in the practice of the present invention include polymers of lactic acid (including polymers of its stereospecific dimer L(-)lactide), glycolic acid (including its dimer glycolide), and 2-hydroxy butyric acid. Also included in the term "polymerized alpha-hydroxy acid" are copolymers of PLA such as the copolymers of PLA and ε-caprolactone (2-oxepanone) and/or γ-caprolactone (5-ethyl-2-oxolanone).

The preferred poly(lactic acid) (PLA) used in the practice of the present invention is a 100% bio-derived polymer, prepared catalytically from L(-)lactide, preferably having a melting point of 130-200°C. The intrinsic viscosity of the PLA used in the practice of the present invention is preferably at least 0.7 dUg, more preferably at least 0.9 dUg, and is preferably at up to 2.0 dUg, more preferably up to 1.6 dUg.

PLA's suitable for practicing this invention are available from Cargill, Inc., Minetonka, MN (including PLA Polymer 4040D) and other suppliers.

The PTT/PAHA polymer compositions can be prepared by any known technique, including physical blends and melt blends. Preferably the PTT and PAHA are melt blended and compounded. Preferably PTT and PAHA are mixed and heated at a temperature sufficient to form a blend, and upon cooling, the blend is formed into a shaped article, such as pellets. The PTT and PAHA can be formed into a blend in many different ways. For instance, they can be (a) heated and mixed simultaneously, (b) pre-mixed in a separate apparatus before heating, or (c) heated and then mixed. As an example, the polymer blend can be made by transfer line injection. The mixing, heating and forming can be carried out by conventional equipment designed for that purpose such as extruders, Banbury mixers or the like. The temperature should be above the melting points of each component but below the lowest decomposition temperature, and accordingly must be adjusted for any particular composition of PAT/PAHA polymers. Temperature is typically in the range of 180°C to 260°C, preferably at least 230°C and more preferably up to 250°C, depending on the particular PTT and PAHA of the invention.

The molded, shaped article with the exception of extruded fibers can contain reinforcing fibrous materials, such as glass (e.g., glass fibers), blended into the PTT/PAHA polymer compositions. In cases where glass is included in the PTT/PAHA polymers, dry glass is fed in the desired proportion to the extruder. The amount of glass, based on the weight of polymer composition, is from 5% to 70%, and preferably from 15% to 60%, more preferably from 20% to 50%, and most preferably from 30% to 45%, all by weight of the polymer composition.

Depending upon the intended end-use application, the polyester resin may contain minor amounts of other thermoplastic resins or known additives that are conventionally added to thermoplastic resins, for example, stabilizers such as ultraviolet absorbers, antistatic agents, flame retardants, auxiliary flame retardants, coloring agents such as dyes, and pigments, lubricants, plasticizers, nucleating agents and inorganic fillers. Of course, these additives should not be employed in amounts which would adversely affect the benefits achieved by the present invention.

Polyamides such as Nylon 6 or Nylon 6-6 can be added in minor amounts of 0.5 to 15 wt% to improve properties (e.g. strength) and processability to the compositions of the invention.

Inorganic fillers that may be added may be powdery or platy inorganic fillers, which can be selected depending on their required duty. The powdery fillers include carbon black; graphite; silicates such as silica, quartz powder, glass beads, milled glass fiber, glass powder, calcium silicate, aluminum silicate, kaolin, talc, clay, diatomaceous earth and wollastonite; metal oxides such as iron oxide, titanium dioxide, zinc oxide, antimony trioxide and alumina; metal sulphates; metal carbonates such as calcium carbonate and magnesium carbonate; as well as silicon carbide, silicon nitride, boron nitride and various metal powders.

A preferred nucleating agent, preferably 0.005 to 2 wt% of a mono-sodium salt of a dicarboxylic acid selected from the group consisting of monosodium terephthalate, mono sodium naphthalene dicarboxylate and mono sodium isophthalate, as a nucleating agent, can be added as described in US6245844.

The polymer compositions can be made into molded, shaped articles, for example, using conventional equipment. The polymer compositions of the invention provide novel changes in physical properties over PTT itself.

By "molded, shaped article" is meant articles:
(a) formed in a mold by a melt injection molding process (with or without reaction) (e.g., injection compression molding, reaction injection molding, and extrusion compression molding in a cavity),
(b) formed by a blow molding process,
(c) formed by slush molding, or
(d) formed by rotomolding.

Specifically excluded from the definition of "molded, shaped article" are extruded products, such as fibers (including monofilaments, continuous filaments and staple, etc.) and films.

The molded, shaped articles include all types of shaped products with the exception of extruded fibers, such as parts used in automobiles and many other applications, as well as flat-formed sheet materials with a thickness equal to or greater than 150 mils to 2 inches.

The following examples are presented for the purpose of illustrating the invention, and are not intended to be limiting. All parts, percentages, etc., are by weight unless otherwise indicated.

### EXAMPLES

### Materials

The PTT used was SORONA bright poly(trimethylene terephthalate) (E. I. du Pont de Nemours and Company, Wilmington, DE), having an intrinsic viscosity of 1.02 dl/g.

The PLA used was PLA Polymer 4040D poly(lactic acid) from Cargill, Inc., Minetonka, MN.

Glass Fiber #3563 was used and is available from Pittsburgh Plate Glass Company, Pittsburgh PA.

### Test Method 1. Measurement of intrinsic Viscosity

The poly(trimethylene terephthalate) intrinsic and PAHA viscosity (IV) was determined using viscosity measured with a Viscotek Forced Flow Viscometer Y900 (Viscotek Corporation, Houston, TX) for the polymer dissolved in 50/50 wt% trifluoroacetic acid/methylene chloride at a 0.4 grams/dL concentration at 19°C following an automated method based on ASTM D 5225-92. The PTT measured IV values were correlated to IV values measured manually in 60140 wt% phenol/1,1,2,2-tetrachloroethane following ASTM D 4603-96. See also US5840957.

### Test Method 2. Physical Property Measurements

The physical properties of the molded were measured using test bars using an Instron Corp. Tensile Tester, Model no. 1125 (Instron Corp., Norwood, MA).

The tensile properties were measured according to ASTM D-638 and the flexural properties were measured according to ASTM 790.

### Examples 1-3 and Comparative Example A - injection Molding

Mixtures of PTT and PLA were prepared, compounded and extruded, pelletized, and molded into tensile bars, using polymer compositions that contained 5% (Example 1), 10% (Example 2), and 20% (Example 3), all by weight of the PTT/PLA polymer composition (the balance of the polymer composition was PTT). Comparative Example A was PTT without added PLA and used as a control, and thus the blending steps were omitted. Properties are described in Table 1 and 2.

Pellets of PTT were dried to a moisture content of less than 40 micrograms/g polymer in a vacuum oven at 120°C for a minimum of 16 hours. Pellets of PLA were dried to a moisture content of less than 40 micrograms/g polymer in a vacuum oven at 80°C for a minimum of 16 hours. The dried pellets of each polymer were removed from the oven and quickly dropped in the desired weight ratios into a nitrogen blanketed supply hopper that was maintained at room temperature.

The pellets were fed to a 28-mm extruder (Warner-Flyter twin-screw Type 2SK-28-W8D12V, model #180-165, Ramsey NJ) at 100 g/min. The extruder operated at a temperature of about 230°C. The extruded mixed polymer was extruded and cut into pellets.

The pellets were then remelted at 200-260°C in a single screw extruder and extruded into a mold using an injection molding process. The resultant test bars were cooled in air at room temperature and then removed from the mold.

**Table 1. Tensile Bar Properties, 0.506 in. (12.9 mm) wide, thickness 0.123 - 0.126 in. (3.12 - 3.20 mm) thick. All data cells show the average for five tested samples.**

| Example (% PLA) | Young's Modulus (GPa) | Max. Stress (MPa) | Strain at break % |
|---|---|---|---|
| Comp. Ex. A (0%) | 1.998 | 45.74 | 41.59 |
| 1 (5%) | 2.055 | 45.77 | 70.69 |
| 2 (10%) | 1.991 | 47.09 | 113.57 |
| 3 (20%) | 2.094 | 47.75 | 121.38 |

Table 1 shows the strain at break for cast specimens increased substantially with addition of PLA and increases with increasing PLA content. The maximum stress also increased slightly with increasing PLA content.

The compositions of the invention, particularly in molded forms such as Instron test bars, showed a pearlescent appearance that provides an attractive luster. This attractive luster increased as PLA concentration increased.

### Examples 4 - 6 and Comparative Examples B - F

Glass filled molded products were prepared using the polymer compositions of Examples 1-3 and Comparative Example A. The amounts of glass fiber was varied as shown in the Table 2. Results are show below.

**Table 2. Molded Products Containing Glass Fiber, Instron Data.**

| Example # (% PLA) | Glass (%)^{(a)} | Young's Modulus (GPa) | Stress at Break (MPa) | Strain at Break (%) | Flexural Modulus (GPa) | Flexural Strength (MPa) |
|---|---|---|---|---|---|---|
| Comp. Ex. A (0%) | 30 | 8.7 | 96.5 | 2.3 | 8.1 | 168.5 |
| | 40 | 12 | 116.7 | 1.9 | 10.6 | 187.1 |
| 4 (5%) | 30 | 8.4 | 91.1 | 2.3 | 8.0 | 170.2 |
| | 40 | 11.8 | 114.8 | 1.8 | 11.1 | 192.8 |
| 5 (10%) | 30 | 9.2 | 91.1 | 2.3 | 8.3 | 168.8 |
| | 40 | 11.3 | 110.0 | 2.0 | 11.2 | 193.9 |
| 6 (20%) | 30 | 9.6 | 91.5 | 2.1 | 8.8 | 159.2 |
| | 40 | 12.3 | 115.2 | 1.9 | 11.7 | 185.3 |

| | | | | | | |
|---|---|---|---|---|---|---|
| (a). % Glass fiber based on weight of PTT. Glass fiber is #3563 available from Pittsburgh Plate Glass Company (Pittsburgh, PA). | | | | | | |

Table 2 shows that blends performed well in glass-filled compositions in compounding. Surprisingly the samples had comparable physical properties. This is unexpected since PLA has significantly lower physical and mechanical properties than PTT. Using PLA, the practioner can increase the green content (renewable resource percentage) in an engineering plastic component without significantly deteriorating the properties of the final product.

## Claims

1. A molded, shaped article with the exception of extruded fibers, comprising a polymer composition comprising 25 to 98 wt%, by weight of the polymer composition, of poly(trimethylene terephthalate) and 75 to 2 wt%, by weight of the polymer composition, of poly(alpha-hydroxy acid).

2. The molded, shaped article of claim 1, wherein (a) the poly(trimethylene terephthalate) comprises a continuous phase of the polymer composition and the poly(alpha-hydroxy acid) comprises a discontinuous phase of the polymer composition, and (b) the polymer composition comprises at least 50 wt% to about 98 wt%, by weight of the polymer composition, of poly(trimethylene terephthalate) and less than 50 up to about 2 wt%, by weight of the polymer composition, of the poly(alpha-hydroxy acid).

3. The molded, shaped article of claim 1, wherein the poly(alpha-hydroxy acid) is polylactic acid.

4. The molded, shaped article of claim 2, wherein the poly(alpha-hydroxy acid) is polylactic acid.

5. The molded, shaped article of claim 3, wherein the polylactic acid is a bio-derived polymer.

6. The molded, shaped article of claim 1, wherein the poly(trimethylene terephthalate) is made with a 1,3-propane diol prepared by a fermentation process using a renewable biological source.

7. The molded, shaped article of claim 3, wherein the poly(trimethylene terephthalate) is made with a 1,3-propane diol prepared by a fermentation process using a renewable biological source.

8. The molded, shaped article of claim 4, wherein the poly(trimethylene terephthalate) is made with a 1,3-propane diol prepared by a fermentation process using a renewable biological source.

9. The molded, shaped article of claim 1, which contains 5 wt% to 70 wt% filler, by weight of the polymer composition.

10. A process for preparing the molded, shaped article of any of claims 1-9, comprising the steps of:
(a) providing a polymer composition comprising 25 to 98 wt%, by weight of the polymer composition, of poly(trimethylene terephthalate) and 75 to 2 wt%, by weight of the polymer composition, of poly(alpha-hydroxy acid); and
(b) forming a shaped article in a mold from the polymer composition.

11. The process of claim 10, wherein the forming a shaped article comprises melt injection molding the polymer composition.

## Patentansprüche

1. Geformter, gestalteter Artikel mit Ausnahme extrudierter Fasern, umfassend eine Polymerzusammensetzung umfassend 25 bis 98 Gew.-%, auf das Gewicht der Polymerzusammensetzung bezogen, von Poly(trimethylenterephthalat) und 75 bis 2 Gew.-%, auf das Gewicht der Polymerzusammensetzung bezogen, von Poly(alpha-hydroxysäure).

2. Geformter, gestalteter Artikel nach Anspruch 1, wobei (a) das Poly(trimethylenterephthalat) eine kontinuierliche Phase der Polymerzusammensetzung umfasst und die Poly(alpha-hydroxysäure) eine diskontinuierliche Phase der Polymerzusammensetzung umfasst und (b) die Polymerzusammensetzung mindestens 50 Gew.-% bis etwa 98 Gew.-%, auf das Gewicht der Polymerzusammensetzung bezogen, von Poly(trimethylenterephthalat) und weniger als 50 bis zu etwa 2 Gew.-%, auf das Gewicht der Polymerzusammensetzung bezogen, von Poly(alpha-hydroxysäure) umfasst.

3. Geformter, gestalteter Artikel nach Anspruch 1, wobei die Poly(alpha-hydroxysäure) Polymilchsäure ist.

4. Geformter, gestalteter Artikel nach Anspruch 2, wobei die Poly(alpha-hydroxysäure) Polymilchsäure ist.

5. Geformter, gestalteter Artikel nach Anspruch 3, wobei die Polymilchsäure ein biologisch abgeleitetes Polymer ist.

6. Geformter, gestalteter Artikel nach Anspruch 1, wobei das Poly(trimethylenterephthalat) mit einem 1,3-Propandiol erzeugt wird, das durch ein Fermentationsverfahren unter Anwendung einer erneuerbaren biologischen Quelle hergestellt wird.

7. Geformter, gestalteter Artikel nach Anspruch 3, wobei das Poly(trimethylenterephthalat) mit einem 1,3-Propandiol erzeugt wird, das durch ein Fermentationsverfahren unter Anwendung einer erneuerbaren biologischen Quelle hergestellt wird.

8. Geformter, gestalteter Artikel nach Anspruch 4, wobei das Poly(trimethylenterephthalat) mit einem 1,3-Propandiol erzeugt wird, das durch ein Fermentationsverfahren unter Anwendung einer erneuerbaren biologischen Quelle hergestellt wird.

9. Geformter, gestalteter Artikel nach Anspruch 1, der 5 Gew.-% bis 70 Gew.-% Füllstoff, auf das Gewicht der Polymerzusammensetzung bezogen, enthält.

10. Verfahren zur Herstellung des geformten gestalteten Artikels nach einem der Ansprüche 1 - 9, umfassend die Schritte des:
(a) Bereitstellens einer Polymerzusammensetzung umfassend 25 bis 98 Gew.-%, auf das Gewicht der Polymerzusammensetzung bezogen, von Poly(trimethylenterephthalat) und 75 bis 2 Gew.-%, auf das Gewicht der Polymerzusammensetzung bezogen, von Poly(alpha-hydroxysäure); und
(b) Bildens eines gestalteten Artikels in einer Form aus Polymerzusammensetzung.

11. Verfahren nach Anspruch 10, wobei das Bilden eines gestalteten Artikels das Schmelzspritzgießen der Polymerzusammensetzung umfasst.

## Revendications

1. Article moulé, mis en forme à l'exception de fibres extrudées, comprenant une composition polymère comprenant 25 à 98 % en pds, en poids de la composition polymère, de poly(téréphtalate de triméthylène) et 75 à 2 % en pds, en poids de la composition polymère, de poly(acide alpha-hydroxy).

2. Article moulé, mis en forme selon la revendication 1, dans lequel (a) le poly(téréphtalate de triméthylène) comprend une phase continue de la composition polymère et le poly(acide alpha-hydroxy) comprend une phase discontinue de la composition polymère et (b) la composition polymère comprend au moins 50 % en pds d'environ 98 % en pds, en poids de la composition polymère, de poly(téréphtalate de triméthylène) et moins de 50 jusqu'à environ 2 % en pds, en poids de la composition polymère, de poly(acide alpha-hydroxy).

3. Article moulé, mis en forme selon la revendication 1, dans lequel le poly(acide alpha-hydroxy) est le poly(acide lactique).

4. Article moulé, mis en forme selon la revendication 2, dans lequel le poly(acide alpha-hydroxy) est le poly(acide lactique).

5. Article moulé, mis en forme selon la revendication 3, dans lequel le poly(acide lactique) est un polymère bio-dérivé.

6. Article moulé, mis en forme selon la revendication 1, dans lequel le poly(téréphtalate de triméthylène) est fabriqué avec un 1,3-propane diol préparé par l'intermédiaire d'un procédé de fermentation utilisant une source biologique renouvelable.

7. Article moulé, mis en forme selon la revendication 3, dans lequel le poly(téréphtalate de triméthylène) est fabriqué avec un 1,3-propane diol préparé par l'intermédiaire d'un procédé de fermentation utilisant une source biologique renouvelable.

8. Article moulé, mis en forme selon la revendication 4, dans lequel le poly(téréphtalate de triméthylène) est fabriqué avec un 1,3-propane diol préparé par l'intermédiaire d'un procédé de fermentation utilisant une source biologique renouvelable.

9. Article moulé, mis en forme selon la revendication 1, qui contient 5 % en pds jusqu'à 70 % en pds d'une charge, en poids de la composition polymère.

10. Procédé de préparation de l'article moulé, mis en forme selon l'une quelconque des revendications 1 à 9, comprenant les étapes de:
(a) fourniture d'une composition polymère comprenant 25 à 98 % en pds, en poids de la composition polymère, d'un poly(téréphtalate de triméthylène) et 75 à 2 % en pds, en poids de la composition polymère, de poly(acide alpha-hydroxy); et
(b) formation d'un article mis en forme dans un moule à partir de la composition polymère.

11. Procédé selon la revendication 10, dans lequel la formation d'un article mis en forme comprend le moulage par injection à l'état fondu de la composition polymère.
